# EUROPÄISCHE PATENTSCHRIFT

(11) **EP 1 671 993 B1**
(45) Veröffentlichungstag und Bekanntmachung des Hinweises auf die Patenterteilung: **04.03.2009**
(21) Anmeldenummer: 05026425.8
(22) Anmeldetag: 03.12.2005
(51) Int. Cl.: C08G 18/40, C08G 18/09, C08G 18/08

(54) **Kunststofformteile aus Polymer gefüllten Polyurethanen und deren Verwendung**
Moulded parts made from polymer filled polyurethanes and their use
Articles moulés à base de polyurethannes chargées de polymères et leur utilisation

(30) Priorität: 17.12.2004 DE 102004060800
(43) Veröffentlichungstag der Anmeldung: 21.06.2006
(73) Patentinhaber: Bayer MaterialScience AG, 51368 Leverkusen (DE)
(72) Erfinder: Haas, Peter, Dr., 42781 Haan (DE); Paul, Reiner, Dr., 42799 Leichlingen (DE); Wegener, Dirk, Dr., 40789 Monheim (DE)

(56) Entgegenhaltungen:
- EP-A- 0 102 541
- EP-A- 0 448 813
- US-A- 4 299 924

## Beschreibung

Die Erfindung betrifft Kunststoffformteile aus Polyurethanen mit hoher Zähigkeit, Biegefestigkeit und hohem Wärmestand und deren Verwendung.

In US 4 299 924 wird ein Verfahren zur Herstellung von Polyisocyanurat (PIR)-Kunststoffen beschrieben, die einen hohen Wärmestand, eine hohe Zähigkeit und eine hohe Biegefestigkeit besitzen. Als Polyolkomponente werden Polymerpolyole verwendet, die durch ethylenisch ungesättigte Monomere wie Styrol, Acrylnitril usw. modifiziert sind. Die Polyole werden mit einem hohen Isocyanatüberschuss bzw. hohen Indices verarbeitet, um die besagten Kunststoffe zu erzeugen. Hierdurch werden die Volumenströme auf der Isocyanatseite um ein Mehrfaches größer als auf der Polyolseite. Dies führt produktionstechnisch zu großen Problemen.

In EP-A 102 54] wird die Herstellung von kompakten, wärmebeständigen Polyurethan-Formteilen, die Isocyanuratgruppen enthalten, beschrieben. Als Polyisocyanate werden Mischungen aus isomeren Diphenylmethandiisocyanaten (MDI) oder Mischungen aus MDI und Polyphenylpolymethylen-polyisocyanaten (pMDI) eingesetzt, die mit Polyetherpolyolen umgesetzt werden, die dispergierte Polymerpartikel, Polyharnstoffe und/oder Pfropfpolymere enthalten.

Aufgabe der vorliegenden Erfindung war es, unter Verbesserung der Eigenschaften wie Zähigkeit, Wärmestand und Biegefestigkeit sowie Verlängerung der Schusszeiten bei ausgeglichenen Dosierströmen insbesondere große Formteile herzustellen.

Die Aufgabe konnte mit den erfindungsgemäßen Kunststoffformteilen gelöst werden.

Gegenstand der vorliegenden Erfindung sind daher Kunststoffformteile aus Polyurethanen, wobei das Polyurethan erhältlich ist aus
a) Isocyanaten und/oder Isocyanatprepolymeren
b1) Polyolkomponenten
c) Kettenverlängerern und/oder Vernetzungsmitteln aus der Gruppe bestehend aus Butylenglykol, Anhydrosorbit, Bis-(hydroxyethyl)hydrochinon, Bis-(hydroxyethyl)-bis-phenol A, 1,4-Butandiol, 1,3-Butandiol sowie 1,4-Bis-(2-hydroxyethyl)hydrochihon, Glycerin, Trimethylolpropan, Pentaerythrit sowie deren Alkoxylierungsprodukte und beliebige Gemische daraus
d) Trimerisierungskatalysatoren
e) gegebenenfalls Urethankatalysatoren
f) gegebenenfalls Treibkatalysatoren
g) gegebenenfalls Stabilisatoren und/oder Hilfsmitteln
h) gegebenenfalls Verstärkungsstoffen
**dadurch gekennzeichnet, dass** zusätzlich zur Polyolkomponente b1) mindestens eine Füllstoff enthaltende Polyolkomponente aus der Gruppe bestehend aus Polyharnstoff enthaltende Polyoldispersionen (PHD) b2) und Polyisocyanat-Polyadditionsprodukte (mit Alkanolaminen) enthaltende Polyoldispersionen (PIPA) b3) eingesetzt wird.

Durch Verwendung der Komponenten b2) und/oder b3), insbesondere der PHD-Dispersionen (b2) werden verlängerte Gelzeiten, ein höherer Wärmestand sowie hohe Biegefestigkeiten auch bei niedrigeren Isocyanatindices erhalten.

Der Füllstoffgehalt bezogen auf die jeweilige Polyolkomponente b2) bzw. b3) beträgt 2 bis 40 Gew.-%, bevorzugt 3 bis 30 Gew.-% Füllstoff PHD bzw. PIPA.

Der Isocyanatindex liegt vorzugsweise zwischen 150 und 1000 (Isocyanatindex: molares Verhältnis von NCO-Gruppen zu gegenüber NCO-reaktiven Gruppen multipliziert mit Hundert).

Für die Herstellung der Polyurethanformteile werden als Ausgangskomponenten a) eingesetzt:

Aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel

Q(NCO)n

in der
- n: 2 bis 4, vorzugsweise 2,
und
- Q: einen aliphatischen Kohlenwasserstoffrest mit 2 bis 18, vorzugsweise 6 bis 10 C-Atomen,
einen cycloaliphatischen Kohlenwasserstoffrest mit 4 bis 15, vorzugsweise 5 bis 10 C-Atomen,
einen aromatischen Kohlenwasserstoffrest mit 6 bis 15, vorzugsweise 6 bis 13 C-Atomen,
oder einen araliphatischen Kohlenwasserstoffrest mit 8 bis 15, vorzugsweise 8 bis 13 C-Atomen,
bedeuten, z.B. solche Polyisocyanate, wie sie in der DE-OS 2 832 253, Seiten 10 - 11, beschrieben werden.

Besonders bevorzugt werden in der Regel die technisch leicht zugänglichen Polyisocyanate, z.B. das 2,4- und 2,6-Toluylendiisocyanat sowie beliebige Gemische dieser Isomeren ("TDI"), Polyphenyl-polymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4-Diphenylmethandiisocyanat ableiten.

Der Gehalt an den genannten Gruppen zur Modifizierung des Polyisocyanates kann bis zu 30 Gew.-%, bezogen auf das eingesetzte Isocyanat betragen.

Die Komponenten b2) bzw b3) sind die an sich bekannten "polymermodifizierten" PHD- oder PIPA-Polyole. Bevorzugt sind Dispersionen von Polymeren enthaltenden höhermolekularen Hydroxylverbindungen. Die Dispersionen werden bevorzugt durch Umsetzung von Polyisocyanaten mit primäre und/oder sekundäre Aminogruppen aufweisenden Polyaminen und/oder Hydrazinen bzw. Alkanolaminen in einer 1 bis 8 primäre und/oder sekundäre Hydroxylgruppen aufweisenden Verbindung mit einem Molekulargewicht von 400 bis 10.000 hergestellt.

Derartige Dispersionen von Polymeren enthaltenden höhermolekularen Hydroxylverbindungen sind z.B. aus DE-AS 25 19 004, DE-OS 25 50 796, DE-OS 25 50 797, DE-OS 25 50 860, DE-OS 25 50 833, DE-OS 25 50 862, DE-OS 26 38 759, DE-OS 26 39 254, US-PS 43 74 209, EP-A 00 79 115 und US-PS 4 381 351 bekannt.

In Frage kommen ferner Dispersionen von Reaktionsprodukten von Polyisocyanaten und Alkanolaminen in Polyethern, wie sie z.B. in DE-OS 3 103 757 beschrieben werden.

Als Komponente b1) werden bevorzugt Polyether- und/oder Polyesterpolyole eingesetzt, die ein zahlenmittleres Molekulargewicht von 2.000 bis 16.000 und eine Funktionalität von 2 bis 6 aufweisen.

Solche Polyether- und Polyesterpolyole sind dem Fachmann bekannt und beispielsweise in G. Oertel Kunststoffhandbuch, Band 7, Carl Hanser Verlag, 3. Auflage, München/Wien 1993, S. 57 bis 75 näher beschrieben. Der Aufbau der Polyetherketten kann in bekannter Weise durch Alkoxylierung von entsprechenden Starterverbindungen bewerkstelligt werden, wobei als Alkoxylierungsagenzien bevorzugt Ethylen und/oder Propylen verwendet werden. Als Starter werden bevorzugt solche hydroxygruppenhaltige Verbindungen ausgewählt, die eine Starterfunktionalität von 3 bis 6 bei den Polyether- und/oder Polyesterpolyolen ergeben, die oben erwähnt wurden. Als Starterverbindungen kommen beispielsweise in Betracht Sorbit, Succrose, Pentaerythrit, Glycerin, Trimethylolpropan, Propylenglykol, Ethylenglykol, Butylenglykol und Wasser, wobei die Startergemische (bzw. der Wasserzusatz) so bemessen werden (wird), dass die beschriebenen Funktionalitäten resultieren (bzw. erhalten werden).

Die Polyesterpolyole werden ebenfalls in bekannter Weise durch Polykondensation von mehrfunktionellen Carbonsäuren mit entsprechenden Hydroxylverbindungen, durch Polykondensation von Hydroxycarbonsäuren, durch Polymerisation von Ringestern (Lactonen), durch Polyaddition von Carbonsäureanhydriden mit Epoxiden sowie durch Umsetzung von Säurechloriden mit Alkalisalzen von Hydroxyverbindungen aufgebaut. Bevorzugt werden die Polyester durch Polykondensation von mehrfunktionellen Carbonsäuren wie Phthalsäure, Isophthalsäure, Terephthalsäure, Fumarsäure, Glutarsäure, Adipinsäure und Bernsteinsäure, mit geeigneten Hydroxylverbindungen wie Ethylenglykol, Diethylenglykol, Tetraethylenglykol, 1,2-propandiol, 1,4-Butandiol, 1,6-Hexandiol, Glycerin und Trimethylolpropan hergestellt.

Als Kettenverlängerer c) werden bevorzugt solche mit 2 bis 6 Hydroxygruppen pro Molekül und einer Molmasse von 62 bis 499 eingesetzt. Zu erwähnen sind beispielsweise, Butylenglykol, Anhydrosorbit, Bis-(hydroxyethyl)hydrochinon, Bis-(hydroxyethyl)-bis-phenol A, insbesondere 1,4-Butandiol, 1,3-butandiol sowie 1,4-Bis-(2-hydroxyethyl)hydrochinon, Glycerin, Trimethylolpropan, Pentaerythrit sowie deren Alkoxylierungsprodukte oder beliebige Gemische daraus.

Als Katalysatoren e) sowie f) für die Herstellung der Polyurethane kommen alle bekannten Katalysatoren bzw. Katalysatorsysteme in Betracht, die in der Polyurethanchemie bekannt sind. Verwiesen wird in diesem Zusammenhang beispielsweise auf das oben erwähnte Kunststoffhandbuch, Band 7 (Polyurethane), 3. neu bearbeitete Auflage, Carl Hanser Verlag, München/Wien 1993, Seite 104 ff. Besonders zu erwähnen sind insbesondere Katalysatoren auf Basis von tertiären Aminen, wie Diazobicyclo[2.2.2]octan, N-Methylimidazol, Dimethylaminopropylamin, 1,5-Diazabicyclo[4.3.0]non-5-en und 1,8-Diazabicyclo[5.4.0]undec-7-en, sowie metallorganische Verbindungen, wie Dialkylzinnalkylmercaptide, Dialkylzinncarboxylate, Zinn(II)-carboxylate, Zinkcarboxylate, Dialkoxytitancarboxylate und Titanacetylacetonat.

Als Trimerisierungskatalysatoren d) zum Aufbau von Isocyanurat-Einheiten werden bevorzugt die an sich bekannten Alkali- oder Ammonium-carboxylate wie z.B. Kaliumacetat und Kalium 2-ethylhexoat sowie DABCO TMR der Fa. Air Products eingesetzt. Weitere Katalysatoren sind im Kunststoffhandbuch 7, Carl Hanser Verlag, 3. Auflage, 1993, S. 108 beschrieben.

Als Verstärkungsstoffe h) werden solche eingesetzt, die anorganischer Natur sind und eine Plättchen- und/oder Nadelstruktur aufweisen. Insbesondere handelt es sich um Silikate, wie z.B. Calciumsilikate vom Wollastonittyp und Aluminiumsilikate vom Glimmer- und Kaolintyp. Solche silikatischen Verstärkungsstoffe sind bekannt unter der Bezeichnung Gruppen-, Ring₋, Ketten- oder Bandsilikate und z.B, in Hollemann-Wiberg, W. de Gruyter Verlag (1985) Seite 768 - 778 beschrieben.

Als Stabilisatoren g) können bevorzugt modifizierte Polyethersiloxane verwendet werden, wie sie im Kunststoffhandbuch 7, Carl Hanser Verlag, 3. Auflage 1993, S. 113 beschrieben sind.

Die Herstellung der erfindungsgemäßen Formteile erfolgt nach der bekannten Reaktionsspritzgusstechnik (RSG-Verfahren, RIM-Prozess), wie sie beispielsweise in DE-A 2 622 951 (US 421 18 53) oder DE-A 3 914 718 beschrieben ist. Die Mengenverhältnisse der NCO-Gruppen enthaltenden Komponenten zu den NCO-reaktiven Gruppen enthaltenden Komponenten werden vorzugsweise so ausgewählt, dass sich eine Isocyanatkennzahl von 150 - 1000 ergibt. Die Menge des in die Form eingebrachten Reaktionsgemischs wird so bemessen, dass die Formkörper eine Dichte von mindestens 0,8, vorzugsweise 1,0 bis 1,4 g/cm³ aufweisen. Die Dichte hängt darüber hinaus in starkem Maß von der Art und dem Anteil der mitverwendeten Füllkörper ab.

Die Ausgangstemperatur des in die Form eingebrachten Reaktionsgemisches liegt im Allgemeinen bei 20 bis 80°C. Die Temperatur der Form liegt im Allgemeinen bei 30 bis 130°C, vorzugsweise bei 60 bis 100°C. Die verwendenden Formwerkzeuge sind bekannt und vorzugsweise aus Stahl oder Aluminium oder aus mit Epoxid ummantelten Metallen. Zur Verbesserung der Entformungseigenschaften können die Innenwände mit bekannten Trennmitteln beschichtet werden.

Die in der Form entstehenden Formteile können im Allgemeinen nach einer Formstanzeit von 20 bis 300 Sekunden entformt werden. Gegebenenfalls schließt sich nach der Entformung ein Tempern bei 60 bis 180°C für 30 bis 120 Minuten an.

Die erfindungsgemäßen Kunststoffformteile werden z.B. für großflächige, insbesondere wärmebelastete Teile in der Automobil- und Nutzfahrzeugindustrie verwendet.

Die Erfindung soll anhand der nachfolgenden Beispiele näher erläutert werden.

### Beispiele

**Tabelle 1 Zusammensetzungen (Alle Angaben sind in Gew.-Teilen)**

| Nr. | 1* | 2 | 3 | 4 | 5 | 6 | 7* |
|---|---|---|---|---|---|---|---|
| PHD-Dispersion 1 | 42,5 | 42,5 | 42,5 | 42,5 | 42,5 | 42,5 | |
| SAN-Dispersion 1 | | | | | | | 42,5 |
| Polyether 1 | | | | | | 44,5 | 44,5 |
| Polyether 2 | 43,5 | 42,5 | | | | | |
| Polyether 3 | - | - | 45 | 44,5 | 45,75 | | |
| 1,4-Butandiol | 12 | 10 | 10 | 10 | 10 | 10 | 10 |
| Diethylenglycol (DEG) | 2 | - | | | | | |
| Kaliumacetat, 25 Gew.-% in DEG | 2,5 | 2,5 | 2,0 | 2,0 | 1,75 | 2,5 | 2,5 |
| Polycat 15 von Air Products | - | - | | | | 0,5 | 0,5 |
| Summe "Komponente A" | 102,5 | 97,5 | 99,5 | 99,0 | 100 | 100 | 100 |
| Wollastonit (Verstärkungsstoff) | - | - | 45,7 | 45,9 | 45,1 | 45,7 | 45,7 |
| Isocyanat NCO-Prepolymer 1 | | | | | | | |
| Menge in Gew.-Teilen an NCO-Pre-polymer 1 zu 100 Gew.-Teilen Komponente A | 207 | 173 | 159 | 159 | 156 | 159 | 159 |
| NCO-Index | 350 | 350 | 350 | 350 | 350 | 350 | 350 |
| HDT-Wert gemäß ISO 75-1/75-2 in [°C] | 185 | 160 | 172 | 185 | 180 | 171 | 149 |
| Zähigkeit nach Charpy gemäß DIN EN ISO 179 [kJ/m²] | 12 | 36 | 43 | 45 | 24 | nicht gebrochen | 25 |
| Biegemodul gemäß DIN EN ISO 179 [N/mm²] | 1565 | 1626 | 2949 | 2309 | 2118 | 2150 | 2190 |
| Gelzeit [sec.] | 10 | 10 | 11 | 12 | 13 | 11 | 6 |

| | | | | | | | |
|---|---|---|---|---|---|---|---|
| * Vergleich | | | | | | | |

Die Verarbeitung der in der Tabelle 1 beschriebenen Rezepturen erfolgte durch Reaktionsspritzgusstechnik. Die Komponenten wurden mit einem Hochdruckdosiergerrät nach intensiver Vermischung in einem zwangsgesteuerten Mischkopf in ein geheiztes Plattenwerkzeug mit einer Temperatur von 85°C der Abmessungen 300 x 200 x 3 mm über einen Staubalkenanguss gedrückt. Vor den Versuchen wurde das Werkszeug mit dem Formtrennmittel Acmos 36-5130 der Acmos Chemie, Bremen behandelt.

### PHD-Disperson 1:

Polyharnstoffdispersion De 7619W der Bayer MaterialScience AG mit einem Polyharnstoffgehalt von 20 Gew.-% und mit der OH-Zahl 28 mg KOH/g

### SAN-Dispersion 1:

Styrol-Acrylnitril-Dispersion De 3699 R der Bayer MaterialScience AG mit einem SAN-Gehalt von 20 Gew.-% aus 8 % Styrol und 12 % Acrylnitril und mit der OH-Zahl 28 mg KOH/g

### Polyether 1:

Polyether der OH-Zahl 28, Funktionalität 3; hergestellt durch Addition von Propylenoxid und Ethylenoxid im Verhältnis 78/22 an Trimethylolpropan als Starter mit überwiegend primären OH-Gruppen

### Polyether 2:

Polyether der OH-Zahl 56, Funktionalität 2; hergestellt durch Addition von Propylenoxid und Ethylenoxid (50/50) an Propylenglycol als Starter mit überwiegend primären OH-Gruppen

### Polyether 3:

Polyether der OH-Zahl 37, Funktionalität 2; hergestellt durch Addition von Propylenoxid und Ethylenoxid (28/72) an Glycerin als Starter mit überwiegend primären OH-Gruppen

### NCO-Prepolymer 1:

Prepolymer mit einem NCO-Gehalt von 28 % hergestellt nach Beispiel E, Seite 4 der DE-B 102 59 184:

Ein Prepolymer aus (i) 90 Gew.-Teilen (0,675 und NCO) eines Polyisocyanates hergestellt durch Phosgenierung von Anilin/Formaldehyd-Kondensationsprodukten mit einer Viskosität von 320 cP bei 25°C und einem NCO-Gehalt von etwa 31,5 Gew.-% und (ii) 10 Gew.-Teilen (0,008 mol OH) eines Fettssäureesters (Reaktionsprodukt aus 544 Gew.-Teile Pentaerythritol, 3390 Gew.-Teile Ölsäure und 292 Gew.-Teile Adipinsäure; OH-Zahl 19,5; Säurezahl 25,0; Molekulargewicht 1246) wurde bei 70°C erzeugt. Die Reaktionsmischung wurde unter Rühren für 4 Stunden bei 70°C gehalten. Der NCO-Gehalt betrug am Ende der Reaktion 28 %.

### Polycat 15: Bis(3-N,N-dimethylaminopropyl)amin (Urethankatalysator)

Verstärkungsstoff: Wollastonit Rimgloss 1 der Firma NYCO Minerals, Willsboro NY, USA
Polyoltemperatur: 30 bis 40°C
Isocyanattemperatur: 30 bis 40°C
Formtemperatur: 85°C
Formstandzeit: 240 sec

Durch Verwendung insbesondere der PHD-Polyhamstoff-Dispersionen zur Herstellung der PIR-Gruppen enthaltenden PUR-Formteile gelingt die Herstellung von Werkstoffen mit
hohem HDT-Wert
hohem Biegemodul
guten Zähigkeitseigenschaften
langsamem Reaktionsverhalten.

## Patentansprüche

1. Kunststoffformteile aus Polyurethanen mit hoher Zähigkeit, Biegefestigkeit und Wärmestand, wobei das Polyurethan erhältlich ist aus
a) mindestens einem Isocyanat und/oder Isocyanatprepolymer
b1) mindestens einer Polyolkomponente
c) mindestens einem Kettenverlängerer und/oder Vernetzungsmittel aus der Gruppe bestehend aus Butylenglykol, Anhydrosorbit, Bis-(hydroxyethyl)hydrochinon, Bis(hydroxyethyl)-bis-phenol A, 1,4-Butandiol, 1,3-Butandiol, 1,4-Bis-(2-hydroxyethyl)hydrochinon, Glycerin, Trimethylpropan, Pentaerythrit und deren Alkoxylierungsprodukte und beliebige Gemische daraus
d) mindestens einem Trimerisierungskatalysator
e) gegebenenfalls Urethankatalysatoren
f) gegebenenfalls Treibkatalysatoren
g) gegebenenfalls Stabilisatoren und/oder Hilfsmitteln
h) gegebenenfalls Verstärkungsstoffen
**dadurch gekennzeichnet, dass** zusätzlich zur Polyolkomponente b1) mindestens eine Füllstoff enthaltende Polyolkomponente aus der Gruppe bestehend aus Polyharnstoff enthaltende Polyoldispersionen (b2) und Polyisocyanat-Polyadditionsprodukte (mit Alkanolaminen) enthaltende Polyoldispersionen (b3) eingesetzt wird.

2. Verwendung der Kunststoffformteile bei der Herstellung von großflächigen Teilen für die Automobil- und Nutzfahrzeugindustrie.

## Claims

1. Plastic mouldings from polyurethanes with high tenacity, flexural strength and heat stability, the polyurethane being obtainable from
a) at least one isocyanate and/or isocyanate prepolymer
b1) at least one polyol component
c) at least one chain extender and/or crosslinking agent from the group comprising butylene glycol, anhydrosorbitol, bis(hydroxyethyl)-hydroquinone, bis(hydroxyethyl)bisphenol A, 1,4-butanediol, 1,3-butanediol, 1,4-bis(2-hydroxyethyl)hydroquinone, glycerol, trimethylolpropane, pentaerythritol and their alkoxylation products and any desired mixtures thereof
d) at least one trimerization catalyst
e) optionally urethane catalysts
f) optionally blowing catalysts
g) optionally stabilizers and/or auxiliary substances
h) optionally reinforcing agents,
**characterized in that** at least one filler-containing polyol component from the group comprising polyol dispersions containing polyurea b2) and polydispersions containing polyisocyanate polyaddition products (with alkanolamines) b3) is used in addition to the polyol component b1).

2. Use of the plastic mouldings in the production of large parts for the automobile and commercial vehicle industry.

## Revendications

1. Pièces moulées en matière plastique constituées de polyuréthane avec une ténacité, une résistance à la flexion, une résistance thermique élevées, le polyuréthane étant obtenu à partir
a) d'au moins un isocyanate et/ou un prépolymère d'isocyanate
b1) d'au moins un constituant polyol
c) d'au moins un agent d'allongement de chaîne et/ou un agent de réticulation choisi parmi le butylèneglycol, l'anhydrosorbitol, la bis-(hydroxyéthyl)hydroquinone, le bis-(hydroxyéthyl)-bis-phénol A, le 1,4-butanediol, le 1,3-butanediol, la 1,4-bis-(2-hydroxyéthyl)-hydroquinone, la glycérine, le triméthylpropane, le pentaérythritol et leurs produits d'alcoxylation et des mélanges quelconques de ceux-ci
d) d'au moins un catalyseur de trimérisation
e) éventuellement de catalyseurs d'uréthane
f) éventuellement de catalyseurs propulseurs
g) éventuellement de stabilisateurs et/ou d'auxiliaires
h) éventuellement de matières de renforcement
**caractérisées en ce que** l'on utilise en plus du constituant polyol b1) au moins un constituant polyol contenant une charge choisi parmi des dispersions de polyols contenant une polyurée (b2) et des dispersions de polyols contenant des produits de polyaddition de polyisocyanate (avec des alcanolamines) (b3).

2. Utilisation des pièces moulées en matière plastique dans la préparation de pièces de grande surface destinées à l'industrie automobile et des véhicules utilitaires.
